# EUROPÄISCHE PATENTSCHRIFT

(11) **EP 3 728 277 B1**
(45) Veröffentlichungstag und Bekanntmachung des Hinweises auf die Patenterteilung: **23.11.2022**
(21) Anmeldenummer: 17835837.0
(22) Anmeldetag: 19.12.2017
(51) Int. Cl.: C07F 7/18

(54) **OXAMIDOESTER-GRUPPEN AUFWEISENDE SILANE**
SILANES COMPRISING OXAMIDO ESTER GROUPS
SILANES PRÉSENTANT DES GROUPES ESTER D'OXAMINE

(43) Veröffentlichungstag der Anmeldung: 28.10.2020
(73) Patentinhaber: Wacker Chemie AG, 81737 München (DE)
(72) Erfinder: SCHÄFER, Oliver, 84489 Burghausen (DE)
(74) Vertreter: Mieskes, Klaus Theoderich
(86) Internationale Anmeldenummer: PCT/EP2017/083534
(87) Internationale Veröffentlichungsnummer: WO 2019/120483

(56) Entgegenhaltungen:
- WO-A2-2011/090644
- Pubchem: "ethyl 2-[3-[methoxy(dimethyl)silyl]propylamino]- 2-oxoacetate", NIH U.S. National Library of Medicine National Center for Biotechnology Information, 13. Februar 2015 (2015-02-13), Seiten 1-9, XP055474233, Gefunden im Internet: URL:https://pubchem.ncbi.nlm.nih.gov/compo und/89368886#section=Top [gefunden am 2018-05-11]
- DATABASE REAXYS [Online] Elsevier; 2011, N.V. ORGANON: "XRN 21060136", XP002780947, Database accession no. XRN 21060136 & WO 2011/012600 A1 (ORGANON NV [NL]; LOOZEN HUBERT JAN JOZEF [NL]; TIMMERS CORNELIS MARIUS) 3. Februar 2011 (2011-02-03)
- DATABASE REAXYS [Online] Elsevier; 2007, Choi et al: XP002780948, Database accession no. XRNs 11152019, 11152020 & CHOI ET AL: J. MED. CHEM., Bd. 50, 2007, Seiten 3841-3850,
- NAGEL U ET AL: "The first stereospecific catalytic hydrogenation with a polymer supported optically active rhodium complex", J. CHEM. SOC., CHEM. COMMUN., , Nr. 14 1. Januar 1986 (1986-01-01), Seiten 1098-1099, XP009505292, Gefunden im Internet: URL:http://pubs.rsc.org/en/Content/Article Landing/1986/C3/c39860001098#|divAbstract

## Beschreibung

Die Erfindung betrifft Oxamidoester-Gruppen aufweisende Silane, Verfahren zu deren Herstellung sowie deren Verwendung.

Die chemische Gruppe 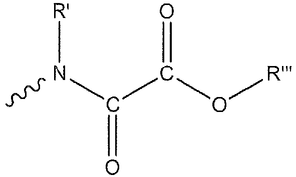 wird häufig als 2-Amino-2-oxoacetat- oder als Oxamid- bzw. als Oxamidoester-Gruppe bezeichnet, wobei im Folgenden der Begriff Oxamidoester als Bezeichnung für diese Gruppe verwendet werden soll. Oxamidoester haben durch die Kombination der Halbester-Struktur mit einer Oxo-Gruppe den Vorteil reaktiver als Amide oder Carbamate zu sein, v.a. bei der Umsetzung mit Aminen oder Alkoholen. Sie sind im Vergleich zu Isocyanat-Strukturen jedoch deutlich stabiler - sie dimerisieren oder trimerisieren z.B. nicht und sind deutlich weniger reaktiv, was die Reaktionsführung mit diesen Gruppen deutlich einfacher gestaltet.

Oxamidoester-Gruppen enthaltende Trialkoxy-Silane sind in der DE 23 15 242 C2 erwähnt zur Umsetzung mit Polyazamid-Lösungen. Ein Verfahren zur Herstellung dieser Produkte ist hier jedoch nicht beschrieben. Diese Trialkoxy-funktionellen Silane haben darüber hinaus den Nachteil, dass sie aufgrund ihrer Trifunktionalität nur sehr eingeschränkt als Baustein zur Herstellung entsprechend funktionalisierter Siloxane wie sie u.a. in der US-A 2007/149745 beschrieben werden, verwendet werden können.

Daher wurde nach Wegen gesucht Oxamidoester-Gruppen enthaltene Silane in hoher Reinheit herzustellen, die mit großer Flexibilität eingesetzt werden können, wie z.B. zur Herstellung Oxamido-funktioneller Siloxane. Ein bekannter Weg zur Herstellung Oxamidoester-Gruppen enthaltender Silane ist die Hydrosilylierung ungesätigter Oxamidester mit Si-H funktionellen Silanen, wie sie in der WO 2009/002667 beschrieben wurde. Dieses Verfahren hat jedoch den Nachteil, dass mit sehr leicht flüchtigen Chlorsilanen gearbeitet werden muss, deren Handhabung spezieller Vorrichtungen bedarf.

WO 2011/090644 A2 beschreibt ein Oxalataminosilan, seine Herstellung und Verwendung in der Herstellung von Haftvermittlern.

Gegenstand der Erfindung sind Oxamidoester-Gruppen aufweisende Silane der allgemeinen Formel 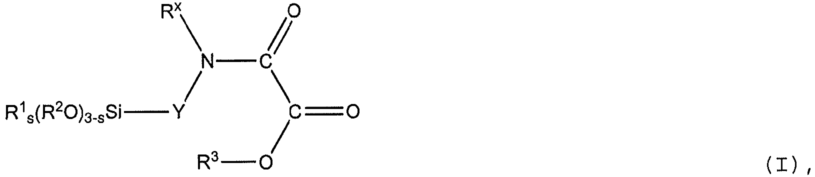 wobei
**R¹** gleich oder verschieden sein kann und einwertige, gegebenenfalls substituierte, SiC-gebundene Kohlenwasserstoffreste bedeutet, welche durch Heteroatome unterbrochen sein können,
**R²** gleich oder verschieden sein kann und Wasserstoffatom oder einwertige, gegebenenfalls substituierte Kohlenwasserstoffreste bedeutet, welche durch Heteroatome unterbrochen sein können,
**R³** monovalente, gegebenenfalls substituierte Kohlenwasserstoffreste bedeutet, die durch Sauerstoffatome unterbrochen sein können,
**R^{x}** Wasserstoffatom oder gegebenenfalls substituierte Kohlenwasserstoffreste bedeutet,
**Y** zweiwertige, gegebenenfalls substituierte Kohlenwasserstoffreste darstellt, die durch Sauerstoffatome oder Stickstoffatome unterbrochen sein können, und
**s** 1 oder 2 ist.

Beispiele für Kohlenwasserstoffreste R¹ sind Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder Aralkylreste wie der Benzylrest oder der α- und der β-Phenylethylrest.

Beispiele für substituierte Kohlenwasserstoffreste R¹ sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenylrest; Hydroxyalkylreste, wie der Hydroxypropylrest; oder Epoxidreste wie der Glycidyloxypropylrest.

Vorzugsweise handelt es sich bei Rest R¹ um gegebenenfalls mit Halogenatomen oder Hydroxygruppen substituierte, SiC-gebundene Kohlenwasserstoffreste mit 1 bis 20 Kohlenstoffatomen, die durch Sauerstoffatome unterbrochen sein können, bevorzugt um Kohlenwasserstoffreste mit 1 bis 6 Kohlenstoffatomen, besonders bevorzugt um aliphatische Kohlenwasserstoffreste mit 1 bis 6 Kohlenstoffatomen, insbesondere um den Methyl-, Ethyl- oder Propylrest, ganz besonders bevorzugt um den Methylrest.

Beispiele für Rest R² sind die für den Rest R¹ angegebenen Reste sowie über Kohlenstoffatom gebundene Polyalkylenglykolreste oder Wasserstoffatom.

Bevorzugt handelt es sich bei Rest R² um Wasserstoffatom oder einwertige, gegebenenfalls substituierte Kohlenwasserstoffreste, die durch Sauerstoffatome unterbrochen sein können, besonders bevorzugt um Kohlenwasserstoffreste mit 1 bis 6 Kohlenstoffatomen, insbesondere um den Methyl-, Ethyl- oder Propylrest.

Beispiele für Rest R³ sind die für den Rest R¹ angegebenen Reste sowie über Kohlenstoffatom gebundene Polyalkylenglykolreste.

Bevorzugt handelt es sich bei Rest R³ um einwertige, gegebenenfalls substituierte Kohlenwasserstoffreste, die durch Sauerstoffatome unterbrochen sein können, besonders bevorzugt um Kohlenwasserstoffreste mit 1 bis 6 Kohlenstoffatomen, insbesondere um den Methyl-, Ethyl- oder Propylrest.

Beispiele für Rest R^{x} sind die für den Rest R¹ angegebenen Reste oder Wasserstoffatom.

Vorzugsweise handelt es sich bei Rest R^{x} um Wasserstoffatom oder gegebenenfalls mit -CN, -Halogen oder mit Alkoxysilylgruppen substituierte Kohlenwasserstoffreste, bevorzugt um Wasserstoffatom oder Alkylgruppen, besonders bevorzugt um Wasserstoffatom oder lineare Alkylgruppen mit 1 bis 6 Kohlenstoffatomen, insbesondere um Wasserstoffatom, den Methyl- oder Ethylrest, ganz besonders bevorzugt um Wasserstoffatom.

Beispiele für Rest Y sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Alkenylenreste, wie der Vinylen- und der Allylenrest; Cycloalkylenreste, wie Cyclopentylen-, Cyclohexylen-, Cycloheptylenreste und Methylcyclohexylenreste.

Bei Rest Y handelt es sich vorzugsweise um gegebenenfalls mit Heteroatomen, bevorzugt mit Sauerstoff, Stickstoff, Fluor oder Chlor, substituierte Alkylenreste, bevorzugt um gegebenenfalls mit Sauerstoff, Stickstoff, Fluor oder Chlor substituierte Alkylenreste mit 1 bis 6 Kohlenstoffatomen, besonders bevorzugt um Methylen-, Propylen-, Butylen- oder Ethylaminopropylreste, insbesondere um den n-Propylenrest.

Beispiele für die erfindungsgemäßen Silane sind solche der Formel (I) mit
R¹ = -CH₃, R²=-CH₃, R³=-CH₂CH₃, R^{x} = -H, Y = -CH₂CH₂CH₂-, s=2,
R¹ = -CH₃, R² = -CH₂CH₃, R³ = -CH₂CH₃, R^{x} =-H, Y = -CH₂CH₂CH₂-, s=2,
R¹ = -CH₃, R² = -CH₂CH₃, R³ = -CH₃, R^{x} = -H, Y = -CH₂CH₂CH₂-, s=2,
R¹ = -CH₃, R² = -CH₃, R³ = -CH₂CH₃, R^{x} = -H, Y = -CH₂CH₂CH₂-, s=1,
R¹ = -CH₃, R² = -CH₂CH₃, R³ = -CH₂CH₃, R^{x} = H, Y= -CH₂CH₂CH₂-, s=1,
R¹ = -CH₃, R² = -CH₂CH₃, R³ = -CH₃, R^{x} = -H, Y = -CH₂CH₂CH₂-, s=1,
R¹ = -CH₃, R³ = -CH₂CH₃, R^{x} = -H, Y = -CH₂CH₂CH₂-, s=3,
R¹ = -CH₃, R³ = -CH₃, R^{x} = -H, Y = -CH₂CH₂CH₂-, s=3,
R¹ = -CH₃, R² = -CH₃, R³ = -CH₂CH₃, R^{x} = -H, Y = -CH₂-, s=2,
R¹ = -CH₃, R² = -CH₂CH₃, R³ = -CH₂CH₃, R^{x} = -H, Y= -CH₂-, s=2,
R¹ = -CH₃, R² = -CH₂CH₃, R³ = -CH₃, R^{x} = -H, Y = -CH₂-, s=2,
R¹ = -CH₃, R² = -CH₂CH₃, R³ = -CH₂CH₃, R^{x} = -H, Y =-CH₂CH₂CH₂-NH-CH₂CH₂, s=2,
R¹ = -C₆H₅, R² = -CH₃, R³ = -CH₂CH₃, R^{x} = -H, Y = -CH₂-, s=2,
R¹ = -C₆H₅; R² = -CH₂CH₃, R³ = -CH₂CH₃, R^{x} = -H, Y = -CH₂-, s=2 und
R¹ = -C₆H₅, R² = -CH₂CH₃, R³ = -CH₃, R^{x} = -H, Y = -CH₂-, s=2.

Bevorzugt handelt es sich bei den erfindungsgemäßen Silanen um Mono- oder Dialkoxysilanverbindungen auf Basis aliphatischer Oxamidoester. Besonders bevorzugt sind Mono- oder Dimethoxysilanverbindungen oder Mono- oder Diethoxysilanverbindungen auf Basis aliphatischer Oxamidoester.

Bevorzugt handelt es sich den erfindungsgemäßen Silanen um farblose Verbindungen, besonders bevorzugt um farblose Verbindungen, welche bei Abwesenheit von Wasser stabil sind.

Ein weiterer Gegenstand der Erfindung ist ein Verfahren zur Herstellung von Oxamidoester-Gruppen aufweisenden Silanen durch Umsetzung von Aminosilanen (A) der Formel

R^{x}-NH-Y-Si-R¹ₜ(R²O)₃₋ₜ (II)

mit Oxalsäurediestern (B) der allgemeinen Formel 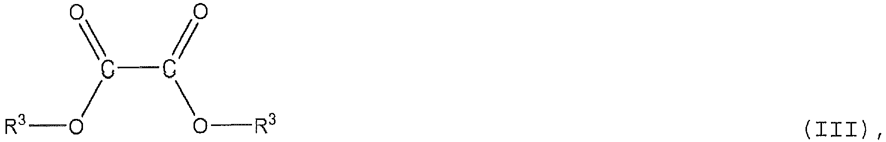 wobei
R¹, R², R³, R^{X} und Y eine der oben dafür angegebenen Bedeutungen haben und
t 1 oder 2 ist.

Beispiele für erfindungsgemäß eingesetzte Aminosilane der Formel (II) sind Aminoalkylalkoxysilane, welche kommerziell in vielfältiger Art und Weise erhältlich sind wie z.B. die Handelsprodukte GENIOSIL^{®} GF 92, GENIOSIL^{®} GF 93, GENIOSIL^{®} GF 96 und GENIOSIL^{®} XL 926 der Wacker Chemie AG oder die Handelsprodukte Dynasilan^{®} 1189, Dynasilan^{®} 1122, Dynasilan^{®} 1124, Dynasilan^{®} 1505, Dynasilan^{®} AMEO und Dynasilan^{®} AMMO der Evonik Industries AG.

Bevorzugt handelt es sich bei den erfindungsgemäß eingesetzten Aminosilanen der Formel (II) um 3-Aminopropyl-dimethylmethoxysilan, 3-Aminopropyl-diethoxymethylsilan, 3-Aminopropyl-triethoxysilan, 3-Aminopropyltrimethoxysilan, N-(2-Aminoethyl)-3-aminopropyltrimethoxysilan, 3-(2-Aminomethylamino)propyltriethoxy-silan, N-(2-Aminoethyl)-3-aminopropylmethyldimethoxysilan, N-Cyclohexyl-3-aminopropyltrimethoxysilan, N-Cyclohexylaminomethyltriethoxysilan, Bis(3-triethoxysilylpropyl)amin, Bis(3-tri-methoxysilylpropyl)amine, N-(n-butyl)-3-amino-propyltrimethoxy-silan, wobei 3-Aminopropyl-dimethylmethoxysilan, 3-Aminopropyl-diethoxymethylsilan, 3-Aminopropyltriethoxysilan und 3-Aminopropyltrimethoxysilan besonders bevorzugt sind.

Beispiele für erfindungsgemäß eingesetzte Verbindungen der Formel (III) sind Diethyloxalat, Dimethyloxalat und Diisopropyloxalat.

Bevorzugt handelt es sich bei den erfindungsgemäß eingesetzten Verbindungen der Formel (III) um Dialkyloxalate, wobei Diethyloxalat besonders bevorzugt ist.

Bei dem erfindungsgemäßen Verfahren ist das molare Verhältnis von Verbindung der Formel (III) zu Aminosilanen der Formel (II) bevorzugt größer als 1:1, besonders bevorzugt zwischen 1:1 und 10:1, insbesondere zwischen 2:1 und 6:1.

Der im erfindungsgemäßen Verfahren bevorzugte Überschuss der Komponente (III) hat insbesondere den Vorteil, dass die Bildung von Nebenprodukten, wie z.B. Oxalsäurediamiden, weitgehend vermieden werden kann.

Zusätzlich zu den Komponenten (A) und (B) können bei dem erfindungsgemäßen Verfahren weitere Komponenten eingesetzt werden, wie z.B. organische Lösungsmittel (C), organische oder inorganische Katalysatoren oder u.a. Alkohole, mit denen man gleichzeitig den Alkoxyrest des Silans austauschen kann, was jedoch nicht bevorzugt ist.

Das Verfahren kann in Anwesenheit oder in Abwesenheit von Lösungsmitteln (C) durchgeführt werden. Falls Lösungsmittel (C) verwendet werden, sind Lösungsmittel oder Lösungsmittelgemische mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Alkohole wie Ethanol, iso-Propanol oder Butanol; Ester, wie Ethylacetat, Butylacetat, Propylpropionat, Ethylbutyrat, Ethyl-isobutyrat; Schwefelkohlenstoff und Nitrobenzol, oder Gemische dieser Lösungsmittel. Bevorzugt wird das erfindungsgemäße Verfahren ohne Lösungsmittel (C) durchgeführt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente.

Die erfindungsgemäße Umsetzung der Komponenten (A) und (B) erfolgt in der Regel spontan und exotherm, bevorzugt ohne den Zusatz von Katalysatoren.

Bei dem erfindungsgemäßen Verfahren können die eingesetzten Komponenten beliebig und in bekannter Weise miteinander vermischt werden. Die Reaktionskomponenten werden in einer bevorzugten Ausführungsform durchmischt. Um eine gute Durchmischung der Reaktionskomponenten zu gewährleisten, kann die Reaktion z.B. unter Rühren durchgeführt werden. Bevorzugt wird bei dem erfindungsgemäßen Verfahren die Verbindung der allgemeinen Formel (III) im Reaktor vorgelegt und Silan (A) zugetropft. Dabei kann das Zutropfen entweder bei Raumtemperatur oder bei erhöhter Temperatur durchgeführt werden. Hier kann u.U. die entstehende Reaktionswärme zur Erwärmung der Reaktionsmischung genutzt werden. Während der Reaktion kann durch Auswahl geeigneter Reaktionsparameter, insbesondere Druck und Temperatur, die Entfernung der enstehenden Spaltprodukte, wie etwa Alkohole, durchgeführt werden. Werden bei dem erfindungsgemäßen Verfahren Verbindungen der Formeln (II) und (III), bei denen die Reste R² unterschiedlich sind zu den Resten R³, eingesetzt, so können je nach Ausführungsform gegebenenfalls in der Reaktionsmischung verbleibende Spaltprodukte R³-OH dazu führen, dass die als Reaktionskomponenten eingesetzten Organyloxysilane durch einen Austausch der Gruppe (R²-O) mit dem Spaltprodukt R³-OH eine andere Organyloxygruppe erhalten. Die so entstehenden neuen Alkohole R²-OH aus den Organyloxysilanen können wiederum mit Rest R³ an der verbleibenden Estergruppe am Oxamidoester-Silan einen Austausch vollziehen. Die so entstehenden umgeesterten Nebenprodukte zeigen jedoch prinzipiell ähnliche chemische Eigenschaften wie die gewünschten Hauptprodukte und beeinträchtigen deren Verwendung, sofern man sie nicht destillativ abtrennen kann, nicht oder nur unwesentlich.

Die Wahl eines geeigneten Reaktors zur Durchführung des erfindungsgemäßen Verfahrens wird dabei im Wesentlichen von der Abführung der freiwerdenden Reaktionswärme sowie der Durchmischung der Reaktionskomponenten und gegebenenfalls Entfernung der entstehenden Spaltprodukte bestimmt. Es können hierbei neben klassischen Rührkesseln auch semi-kontinuierliche Raktoren oder kontinuierliche Reaktoren Verwendung finden.

Die erfindungsgemäße Umsetzung kann bei beliebigen Temperaturen durchgeführt werden, wobei diese durch die Löslichkeit der Reaktionskomponenten nach unten und durch die Zersetzungstemperaturen der Edukte und Produkte nach oben hin begrenzt sind. Vorzugsweise wird das erfindungsgemäße Verfahren bei 0°C bis 150°C, bevorzugt bei 20 bis 150°C, besonders bevorzugt bei 40 bis 100°C, insbesondere bei 60 bis 90°C, durchgeführt.

Das erfindungsgemäße Verfahren wird bevorzugt bei einem Druck von 300 bis 100000 hPa durchgeführt. Vorteilhaft für die Reaktion ist die Ausführung unter einem Druck von 400 bis 1100 hPa.

Bevorzugt wird die Reaktion unter Verwendung von Schutzgas, bevorzugt Stickstoff oder Argon, besonders bevorzugt Stickstoff, durchgeführt, unter anderem um eine Oxidation der eingesetzten Aminosilane und damit eine Verfärbung derselben möglichst zu vermeiden. Die verwendeten Edukte und gegebenenfalls Lösungsmittel sollten so weit wie möglich wasserfrei eingesetzt werden, um eine Hydrolyse der Organyloxysilaneinheiten und eine mögliche Kondensation der so enstehenden Silanol-Gruppen zu vermeiden, was zu einer Reduzierung der Ausbeute führen würde.

Nach Beendigung der erfindungsgemäßen Umsetzung kann die Isolierung und Reinigung der erhaltenen Oxamidoester-Gruppen aufweisenden Silane nach bekannten technischen Verfahren erfolgen, wie z.B. Filtration, Extraktion oder Destillation. Bevorzugt erfolgt bei dem erfindungsgemäßen Verfahren die Abtrennung der erhaltenen Oxamidoester-Gruppen aufweisenden Silane destillativ, besonders bevorzugt wird eine destillative Abtrennung unter reduziertem Druck (Vakuumdestillation) durchgeführt.

Das erfindungsgemäße Verfahren kann absatzweise, halbkontinuierlich oder vollkontinuierlich durchgeführt werden, bevorzugt wird eine diskontinuierliche Verfahrensweise.

Das erfindungsgemäße Verfahren hat den Vorteil, dass es einfach und schnell in der Durchführung ist.

Das erfindungsgemäße Verfahren hat den Vorteil, dass Oxamidoester-Gruppen aufweisende Silane in hoher Reinheit und großer Ausbeute erhalten werden und leicht destillativ zu reinigen sind.

Das erfindungsgemäße Verfahren hat weiterhin den Vorteil, dass hier leicht zugängliche, günstige und leicht zu verarbeitende Edukte verwendet werden können.

Die erfindungsgemäßen Silane haben den Vorteil, dass sie thermisch äußerst stabil sind.

Des Weiteren haben die erfindungsgemäßen Silane den Vorteil, dass sie eine hohe Polarität zeigen.

Die erfindungsgemäßen bzw. erfindungsgemäß hergestellten Silane können für alle Zwecke eingesetzt werden, für die auch bisher Oxamidoester-Gruppen aufweisende Verbindungen eingesetzt wurden.

Beispielsweise eignen sich die erfindungsgemäßen Silane vorteilhafterweise ausgezeichnet zur Haftvermittlung auf oxidischen Oberflächen.

In den nachstehend beschriebenen Beispielen beziehen sich alle Angaben von Teilen und Prozentsätzen, falls nicht anders angegeben, auf das Gewicht. Des Weiteren beziehen sich alle Viskositätsangaben auf eine Temperatur von 25°C. Sofern nicht anders angegeben, werden die nachstehenden Beispiele bei einem Druck der umgebenden Atmosphäre, also etwa 1010 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Im Folgenden steht
Me für Methylrest und
Et für Ethylrest.

Die folgenden Ausführungsbeispiele wurden alle unter der Verwendung von Stickstoff als Schutzgas durchgeführt, wobei die verwendete Apparatur dabei durch 3 maliges Evakuieren auf 10 hPa und darauf folgendes Befüllen der Apparatur mit Stickstoff inertisiert wurde.

### Beispiel 1

In einem 2 l 3 Hals-Kolben mit Thermoelement, Rührer und Rückflusskühler wurden 876 g (6,0 mol) Diethyloxalat (146,14 g/mol) vorgelegt. Bei einer Temperatur von 22 °C wurden unter Rühren innerhalb von 3 Stunden 295 g (2 mol) 3-Aminopropyl-dimethylmethoxysilan (147,29 g/mol) so zugegeben, dass die Temperatur im Kolben nicht über 70 °C stieg. Anschließend wurde noch 30 Minuten nachgerührt. Danach wurde die inzwischen leicht gelbe Lösung in eine Destillationsapparatur aus Kolben, Destillationsbrücke, Thermometer und Auffanggefäß überführt. Hiermit wurde der entstandene Ethanol mittels Destillation bei Normaldruck und einer Sumpftemperatur von 90 °C entfernt und anschließend mittels Vakuumdestillation (90°C Sumpftemperatur, 2 mbar) das im Überschuss verwendete Diethyloxalat destillativ entfernt. Der so erhaltene Rückstand wurde nun bei einem Druck von 2 hPa und bei einer Kopftemperatur von 142 °C destillativ gewonnen. Man erhielt 412 g eines farblosen Gemisches aus EtO-CO-CO-HN-CH₂CH₂CH₂-Si-Me₂(OMe) (247,36 g/mol, 62 mol-%) und EtO-CO-CO-HN-CH₂CH₂CH₂-Si-Me₂(OEt) (261,39 g/mol, 38 mol-%).

### Beispiel 2

In einem 2 l 3 Hals-Kolben mit Thermoelement, Rührer und Rückflusskühler wurden 1023 g (7,0 mol) Diethyloxalat (146,14 g/mol) vorgelegt. Bei 22 °C wurden unter Rühren innerhalb von 4 Stunden 382,5 g (2 mol) 3-Aminopropyl-diethoxymethylsilan (191,34 g/mol) so zugegeben, dass die Temperatur im Kolben nicht über 75 °C stieg. Anschließend wurde noch 30 Minuten nachgerührt. Danach wurde die inzwischen leicht gelbe Lösung in eine Destillationsapparatur aus Kolben, Destillationsbrücke, Thermometer und Auffanggefäß überführt. Hiermit wurde der entstandene Ethanol mittels Destillation bei Normaldruck und einer Sumpftemperatur von 90 °C entfernt und anschließend mittels Vakuumdestillation (90°C Sumpftemperatur, 2 mbar) das im Überschuss verwendete Diethyloxalat destillativ entfernt. Der so erhaltene Rückstand wurde nun bei einem Druck von 2 hPa und bei einer Kopftemperatur von 148 °C destillativ gewonnen. Man erhielt 472 g farbloses EtO-CO-CO-HN-CH₂CH₂CH₂-Si-Me(OEt)₂ (291,42 g/mol).

### Beispiel 3

In einem 2 l 3 Hals-Kolben mit Thermoelement, Rührer und Rückflusskühler wurden 584,6 g (4,0 mol) Diethyloxalat (146,14 g/mol) vorgelegt. Bei 22 °C wurden unter Rühren innerhalb von 3 Stunden 221,4 g (1 mol) 3-Aminopropyltriethoxysilan (221,37 g/mol) so zugegeben, dass die Temperatur im Kolben nicht über 70 °C stieg. Anschließend wurde noch 30 Minuten nachgerührt. Danach wurde die inzwischen leicht gelbe Lösung in eine Destillationsapparatur aus Kolben, Destillationsbrücke, Thermometer und Auffanggefäß überführt. Hiermit wurde der entstandene Ethanol mittels Destillation bei Normaldruck und einer Sumpftemperatur von 90 °C entfernt und anschließend mittels Vakuumdestillation (90°C Sumpftemperatur, 2 mbar) das im Überschuss verwendete Diethyloxalat destillativ entfernt. Der so erhaltene Rückstand wurde nun bei einem Druck von 2 hPa und bei einer Kopftemperatur von 153 °C destillativ gewonnen. Man erhielt 239,8 g farbloses EtO-CO-CO-HN-CH₂CH₂CH₂-Si-(OEt)₃ (321,44 g/mol).

### Beispiel 4

In einem 1 l 3 Hals-Kolben mit Thermoelement, Rührer und Rückflusskühler wurden 354 g (3,0 mol) Dimethyloxalat (118,03 g/mol) vorgelegt. Bei 70 °C wurden unter Rühren innerhalb von 2 Stunden 147 g (1 mol) 3-Aminopropyl-dimethylmethoxysilan (147,29 g/mol) so zugegeben, dass die Temperatur im Kolben nicht über 100 °C stieg. Anschließend wurde noch 30 Minuten nachgerührt. Danach wurde die inzwischen leicht gelbe Lösung in eine Destillationsapparatur aus Kolben, Destillationsbrücke, Thermometer und Auffanggefäß überführt. Hiermit wurde der entstandene Methanol mittels Destillation bei Normaldruck und einer Sumpftemperatur von 90 °C entfernt und anschließend mittels Vakuumdestillation (90°C Sumpftemperatur, 2 mbar) das im Überschuss verwendete Dimethyloxalat destillativ entfernt. Der so erhaltene Rückstand wurde nun bei einem Druck von 2 hPa und bei einer Kopftemperatur von 137 °C destillativ gewonnen. Man erhielt 192 g farbloses Produkt MeO-CO-CO-HN-CH₂CH₂CH₂-Si-Me₂(OMe) (233,11 g/mol) .

## Patentansprüche

1. Oxamidoester-Gruppen aufweisende Silane der allgemeinen Formel 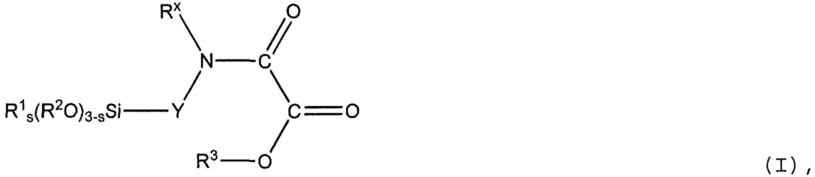 wobei
**R¹** gleich oder verschieden sein kann und einwertige, gegebenenfalls substituierte, SiC-gebundene Kohlenwasserstoffreste bedeutet, welche durch Heteroatome unterbrochen sein können,
**R²** gleich oder verschieden sein kann und Wasserstoffatom oder einwertige, gegebenenfalls substituierte Kohlenwasserstoffreste bedeutet, welche durch Heteroatome unterbrochen sein können,
**R³** monovalente, gegebenenfalls substituierte Kohlenwasserstoffreste bedeutet, die durch Sauerstoffatome unterbrochen sein können,
**R^{x}** Wasserstoffatom oder gegebenenfalls substituierte Kohlenwasserstoffreste bedeutet,
**Y** zweiwertige, gegebenenfalls substituierte Kohlenwasserstoffreste darstellt, die durch Sauerstoffatome oder Stickstoffatome unterbrochen sein können, und
**s** 1 oder 2 ist.

2. Oxamidoester-Gruppen aufweisende Silane gemäß Anspruch 1, **dadurch gekennzeichnet, dass** es sich um beim Rest R^{x} um Wasserstoffatom handelt.

3. Verfahren zur Herstellung von Oxamidoester-Gruppen aufweisenden Silanen durch Umsetzung von Aminosilanen (A) der Formel
R^{x}-NH-Y-Si-R¹ₜ(R²O)₃₋ₜ (II)
mit Oxalsäurediestern (B) der allgemeinen Formel 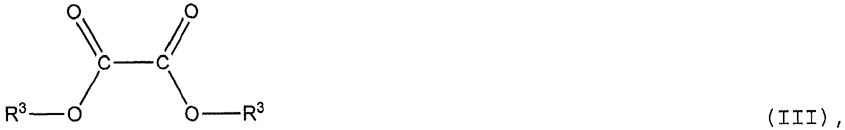 wobei
R¹, R², R³, R^{x} und Y eine der oben dafür angegebenen Bedeutungen haben und
t 1 oder 2 ist.

4. Verfahren gemäß Anspruch 3, **dadurch gekennzeichnet, dass** das molare Verhältnis von Verbindung der Formel (III) zu Aminosilanen der Formel (II) größer als 1:1 ist.

5. Verfahren gemäß einem oder mehreren der Ansprüche 3 bis 4, **dadurch gekennzeichnet, dass** es bei 0°C bis 150°C durchgeführt wird.

6. Verfahren gemäß einem oder mehreren der Ansprüche 3 bis 5, **dadurch gekennzeichnet, dass** es bei einem Druck von 400 bis 1100 hPa durchgeführt wird.

## Claims

1. Silanes having oxamidoester groups that are of the general formula 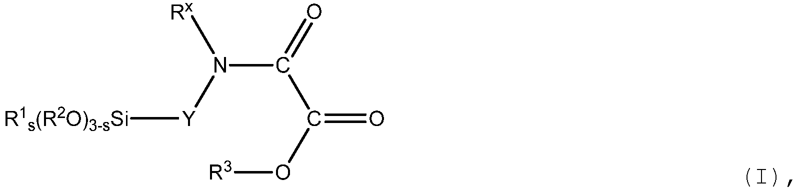 where
**R¹** may be identical or different and represents monovalent, optionally substituted, SiC-attached hydrocarbon radicals that may be interrupted by heteroatoms,
**R²** may be identical or different and represents a hydrogen atom or monovalent, optionally substituted hydrocarbon radicals that may be interrupted by heteroatoms,
**R³** represents monovalent, optionally substituted hydrocarbon radicals that may be interrupted by oxygen atoms,
**R^{x}** represents a hydrogen atom or optionally substituted hydrocarbon radicals,
**Y** represents divalent, optionally substituted hydrocarbon radicals that may be interrupted by oxygen atoms or nitrogen atoms, and
**s** is 1 or 2.

2. Silanes having oxamidoester groups according to Claim 1, **characterized in that** radical R^{x} is a hydrogen atom.

3. Method for preparing silanes having oxamidoester groups by reacting aminosilanes (A) of the formula
R^{x}-NH-Y-Si-R¹ₜ(R²O)₃₋ₜ (II)
with oxalic diesters (B) of the general formula 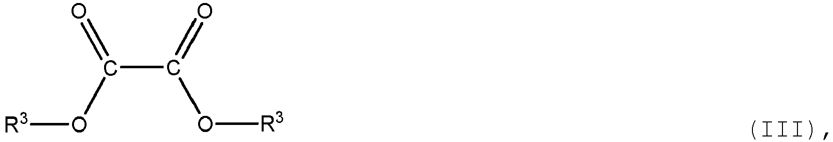 where
R¹, R², R³, R^{x}, and Y have one of the meanings defined above and
t is 1 or 2.

4. Method according to Claim 3, **characterized in that** the molar ratio of compound of the formula (III) to aminosilanes of the formula (II) is greater than 1:1.

5. Method according to one or more of Claims 3 to 4, **characterized in that** it is carried out at 0°C to 150°C.

6. Method according to one or more of Claims 3 to 5, **characterized in that** it is carried out at a pressure of 400 to 1100 hPa.

## Revendications

1. Silanes comportant des groupes amidoester de formule générale 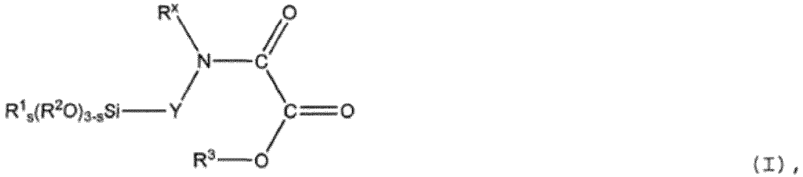 dans laquelle
**R¹** peut être identique ou différent et représente des radicaux hydrocarbonés monovalents, éventuellement substitués, liés à SiC, qui peuvent être interrompus par des hétéroatomes,
**R²** peut être identique ou différent et représente un atome d'hydrogène ou des radicaux hydrocarbonés monovalents, éventuellement substitués, qui peuvent être interrompus par des hétéroatomes,
**R³** représente des radicaux hydrocarbonés monovalents, éventuellement substitués, qui peuvent être interrompus par des atomes d'oxygène,
**R^{x}** représente un atome d'hydrogène ou des radicaux hydrocarbonés éventuellement substitués,
**Y** représente des radicaux hydrocarbonés divalents, éventuellement substitués, qui peuvent être interrompus par des atomes d'oxygène ou des atomes d'azote, et
**s** représente 1 ou 2.

2. Silanes comportant des groupes amidoester selon la revendication 1, **caractérisés en ce que**, pour ce qui concerne le radical R^{x}, il s'agit d'un atome d'hydrogène.

3. Procédé de préparation de silanes comportant des groupes amidoester par réaction d'aminosilanes (A) de formule
R^{x}-NH-Y-Si-R¹ₜ(R²O)₃₋ₜ (II)
avec des diesters de l'acide oxalique (B) de formule générale 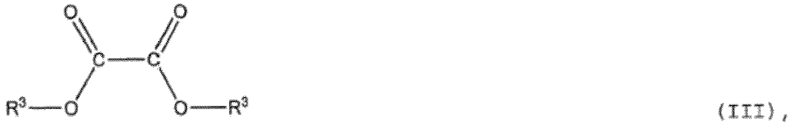 dans lesquelles
R¹, R², R³, R^{x} et Y ont l'une des significations qui leur sont données ci-dessus et
t représente 1 ou 2.

4. Procédé selon la revendication 3, **caractérisé en ce que** le rapport en moles du composé de formule (III) aux aminosilanes de formule (II) est supérieur à 1:1.

5. Procédé selon l'une ou plusieurs des revendications 3 à 4, **caractérisé en ce qu'**il est mis en œuvre à 0 °C à 150 °C.

6. Procédé selon l'une ou plusieurs des revendications 3 à 5, **caractérisé en ce qu'**il est mis en œuvre sous une pression de 400 à 1 100 hPa.
